# EUROPÄISCHE PATENTSCHRIFT

(11) **EP 3 532 742 B1**
(45) Veröffentlichungstag und Bekanntmachung des Hinweises auf die Patenterteilung: **23.12.2020**
(21) Anmeldenummer: 17788209.9
(22) Anmeldetag: 23.10.2017
(51) Int. Cl.: F16C 27/06

(54) **ELASTOMERKÖRPER FÜR EIN WELLENLAGER SOWIE WELLENLAGER**
ELASTOMER BODY FOR A SHAFT BEARING AND SHAFT BEARING
ÉLÉMENT ÉLASTOMÈRE POUR PALIER D'ARBRE AINSI QUE PALIER D'ARBRE

(30) Priorität: 26.10.2016 DE 102016120458
(43) Veröffentlichungstag der Anmeldung: 04.09.2019
(73) Patentinhaber: Vibracoustic AG, 64293 Darmstadt (DE)
(72) Erfinder: DÜRRE, Markus, 79395 Neuenburg am Rhein (DE); PAUL, Christian, 79424 Auggen (DE); ENDHART, Markus, 79219 Staufen (DE)
(74) Vertreter: Patentanwälte Olbricht Buchhold Keulertz
(86) Internationale Anmeldenummer: PCT/EP2017/077038
(87) Internationale Veröffentlichungsnummer: WO 2018/077820

(56) Entgegenhaltungen:
- DE-A1-102007 037 401
- DE-A1-102013 006 732
- DE-A1-102014 107 477
- DE-B1- 1 525 034
- JP-U- S6 418 629
- US-A- 2 933 354
- US-A- 3 639 015

## Beschreibung

Die vorliegende Erfindung betrifft einen Elastomerkörper für ein Wellenlager eines Kraftfahrzeugs, der in einem Spalt zwischen einem Lagerträger und einem Innenkörper anordenbar ist. Ferner betrifft die Erfindung ein Wellenlager mit einem derartigen Elastomerkörper.

Wellenlager der eingangs genannten Art werden zur Lagerung einer Welle, wie beispielsweise einer Kardanwelle, eines Kraftfahrzeugs verwendet. Das Wellenlager dient dazu, die Kardanwelle während des Fahrbetriebs exakt in Position zu halten und axiale Verschiebungen beim Anfahren und Bremsen auszugleichen. Darüber hinaus isoliert das Wellenlager Geräusche und dämpft Resonanzfrequenzen und Taumelbewegungen der Kardanwelle.

Hierzu ist das Wellenlager über den Innenkörper an die Welle gekoppelt, so dass Schwingungen der Welle in das Wellenlager eingeleitet werden. Dadurch beginnt der Elastomerkörper zu schwingen und dämpft und/oder isoliert die in das Wellenlager eingeleiteten Schwingungen. Über den Außenkörper erfolgt die Festlegung des Wellenlagers an einem Kraftfahrzeugteil, insbesondere der Kraftfahrzeugkarosserie.

Aus der DE 43 20 642 C1 geht ein Wellenlager hervor, das ein Wälzlager und einen das Wälzlager in radialem Abstand umgebenden Lagerträger aufweist. Zwischen dem Wälzlager und dem Lagerträger ist ein einteilig ausgebildeter Elastomerkörper mit im Wesentlichen U-förmigem Querschnittsprofil und einer ringförmigen Innen- und Außenwulst angeordnet. Der Elastomerkörper ist formschlüssig und lösbar über seine Außenwulst mit dem Lagerträger verbunden, indem eine an der Stirnfläche des Lagerträgers ausgebildete Umbördelung in eine in der Außenwulst eingebrachte, umlaufende Einkerbung eingreift.

Ferner offenbart DE 10 2014 107 477 A1 ein Wellenlager mit einem Lagerträger, einem Wälzlager und einem zwischen dem Lagerträger und dem Wälzlager angeordneten Elastomerkörper, wobei der Elastomerkörper mittels eines Sicherungsrings an dem Lagerträger festgelegt ist.

Zudem gehen aus DE 10 2007 037 401 A1, DE 10 2013 006 732 A1, DE 10 2014 107 477 A1, DE 15 25 034 B1, US 3,639,015 A, US 2,933,354A und JP S64-18629 U Elastomerkörper hervor, die einen ersten Befestigungsschenkel und einen zweiten Befestigungsschenkel und einen die beiden Befestigungsschenkel miteinander verbindenden Verbindungsabschnitt aufweisen, wobei in einen der Befestigungsschenkel eine Nut eingebracht ist, die einen radial innenliegenden Körper umgreift.

Der vorliegenden Erfindung liegt die Aufgabe zugrunde, einen Elastomerkörper und ein Wellenlager zu schaffen, die eine verbesserte Befestigung des Elastomerkörpers an einem Lagerträger und/oder einem Innenkörper ermöglichen.

Zur Lösung der Aufgabe wird ein Elastomerkörper mit den Merkmalen des Anspruchs 1 sowie ein Wellenlager mit den Merkmalen nach Anspruch 8 vorgeschlagen.

Vorteilhafte Ausgestaltungen des Elastomerkörpers und des Wellenlagers sind Gegenstand der jeweiligen abhängigen Ansprüche.

Gemäß einem ersten Aspekt wird ein Elastomerkörper für ein Wellenlager eines Kraftfahrzeugs vorgeschlagen, der in einem Spalt zwischen einem Lagerträger und einem Innenkörper anordenbar ist, aufweisend einen ersten Befestigungsschenkel, einen zweiten Befestigungsschenkel und einen die beiden Befestigungsschenkel miteinander verbindenden Verbindungsabschnitt, wobei wenigstens einer der Befestigungsschenkel eine Aufstecknut aufweist, die derart formschlüssig und/oder kraftschlüssig auf den Lagerträger oder den Innenkörper (nicht beansprucht) aufsteckbar ist, dass die Aufstecknut den Lagerträger oder den Innenkörper (nicht beansprucht) umgreift, wobei die Aufstecknut einen ersten Schenkel, einen zweiten Schenkel und eine die beiden Schenkel miteinander verbindende Basis aufweist, wobei die Basis einen ersten Basisabschnitt und einen zweiten Basisabschnitt auf, wobei der zweite Basisabschnitt bezüglich dem Befestigungsschenkel verschwenkbar ist, um die Aufstecknut über die Gesamtlänge des Lagerträgers aufzuweiten und die Aufstecknut zum kraftschlüssigen Verbinden auf den Lagerträger aufzustecken. Durch das Aufstecken der Aufstecknut auf den Lagerträger und/oder den Innenkörper (nicht beansprucht) wird eine einfache und kostengünstige Befestigung des Elastomerkörpers an dem Lagerträger und/oder dem Innenkörper (nicht beansprucht) geschaffen. Darüber hinaus ist es möglich, den Elastomerkörper an einem Lagerträger oder einem Innenkörper (nicht beansprucht) zu befestigen, die als Strangpressprofil hergestellt sind. Zudem kann ein nachträgliches Bearbeiten des Lagerträgers und/oder des Innenkörpers (nicht beansprucht) entfallen. Unter Umgreifen wird im Sinne der Erfindung verstanden, dass die Aufstecknut an den Stirnflächen des Lagerträgers oder des Innenkörpers (nicht beansprucht) anliegt. Vorteilhaft entspricht die Breite der Aufstecknut der Breite des Lagerträgers und/oder der Breite des Innenkörpers (nicht beansprucht). Weiterhin vorteilhaft liegt die Aufstecknut an der radial inneren Umfangsfläche des Lagerträgers und/oder an der radial äußeren Umfangsfläche des Innenkörpers (nicht beansprucht) und an den Stirnflächen des Lagerträgers und/oder des Innenkörpers (nicht beansprucht) an. Vorteilhaft ist der Innenkörper als Wälzlager ausgebildet. Der Verbindungsabschnitt kann als eine Falte, insbesondere eine Rollfalte, ausgebildet sein. Ein Abschnitt des Elastomerkörpers kann in axialer Richtung außerhalb des Spalts angeordnet sein. Insbesondere kann der eine Rollfalte bildende Verbindungsabschnitt in axialer Richtung außerhalb des Spalts angeordnet sein.

Insbesondere umgreift die Aufstecknut den Lagerträger oder den Innenkörper, (nicht beansprucht) indem dieser in der Aufstecknut einliegt. Dabei liegt die Basis an der radial inneren Umfangsfläche des Lagerträgers und/oder der radial äußeren Umfangsfläche des Innenkörpers (nicht beansprucht) an und die beiden Schenkel liegen an den Stirnflächen des Lagerträgers und/oder des Innenkörpers (nicht beansprucht) an. Die beiden Schenkel und die Basis können einstückig und materialeinheitlich aus dem Befestigungsschenkel gebildet sein. Die Basis kann bezüglich dem Befestigungsschenkel verschwenkbar sein.

Vorteilhaft ist ein Abstand zwischen den Innenseiten der Schenkel kleiner als eine Breite des Lagerträgers und/oder eine Breite des Innenkörpers. (nicht beansprucht) Dadurch kann eine Vorspannung in axialer Richtung erzeugt werden, um die Aufstecknut kraftschlüssig auf den Lagerträger und/oder den Innenkörper (nicht beansprucht) aufzustecken und zu fixieren.

Dadurch ist die Aufstecknut von dem Elastomerkörper abgekoppelt, um die Bewegungsfreiheit des Elastomerkörpers, insbesondere des Verbindungsabschnitts, zu erhalten. Darüber hinaus ist es möglich, die Aufstecknut über die Gesamtlänge des Lagerträgers oder dem Innenkörper (nicht beansprucht) aufzuweiten, um den Lagerträger und/oder den Innenkörper (nicht beansprucht) zum form- und/oder kraftschlüssigen Verbinden aufzustecken.

In einer vorteilhaften Ausgestaltung ragt der zweite Basisabschnitt in einem Winkel von dem Befestigungsschenkel ab. Dadurch ist der zweite Basisabschnitt und der daran angebrachte Schenkel bezüglich dem ersten Basisabschnitt verschwenkbar, so dass die Aufstecknut über die Gesamtlänge des Lagerträgers und/oder des Innenkörpers (nicht beansprucht) aufweitbar und an dessen Kontur anpassbar ist.

In einer vorteilhaften Ausgestaltung ist in Ecken der Aufstecknut wenigstens eine Aussparung eingebracht. Die Aussparungen verhindern, dass sich scharfe Kanten des Lagerträgers und/oder des Innenkörpers (nicht beansprucht) in die Ecken der Aufstecknut schneiden und so zu einer Beschädigung des Elastomerkörpers führen. Vorteilhaft werden die Aussparungen während der Herstellung des Elastomerkörpers, insbesondere während des Strangpressens oder Spritzgießens, eingebracht. Vorteilhaft sind die Aussparungen in die Innenseiten der Schenkel eingebracht.

In einer vorteilhaften Ausgestaltung weist der Elastomerkörper einen Außendurchmesser auf, der größer ist als ein Innendurchmesser des Lagerträgers und dass der Elastomerkörper einen Innendurchmesser aufweist, der kleiner ist als ein Außendurchmesser des Innenkörpers. Dadurch wird eine massive Erhöhung der radialen Überdeckung des vulkanisierten Elastomerkörpers und Innendurchmesser des Lagerträgers beziehungsweise Außendurchmesser des Innenkörpers geschaffen. Durch diese massive Erhöhung der radialen Überdeckung weist der Elastomerkörper ein Übermaß auf und ist somit mit einer radialen Vorspannung zwischen dem Lagerträger und dem Innenkörper anordenbar. Ferner kann dadurch auf einen Sicherheitsclip oder einen Sicherungsring zur Befestigung des Elastomerkörpers innerhalb des Spalts verzichtet werden.

Vorteilhaft weist wenigstens einer der Befestigungsschenkel eine Buchse auf. Die Buchse bewirkt eine gleichmäßige Flächenpressung und somit eine gleichmäßige Kraftverteilung auf den Lagerträger oder den Innenkörper (nicht beansprucht). Vorteilhaft ist die Buchse in den Elastomerkörper einvulkanisiert. Die Verbindung der Buchse mit dem Elastomerkörper kann dabei formschlüssig und/oder unter Verwendung eines Bindemittels erfolgen. Bei einer formschlüssigen Verbindung sind in die Buchse Öffnungen eingebracht, die von dem Elastomer des Elastomerkörpers durchdrungen sind. Bevorzugt ist die Innenbuchse in dem radial innenliegenden Befestigungsschenkel einvulkanisiert.

In einer vorteilhaften Ausgestaltung weist wenigstens einer der Befestigungsschenkel einen Gummianschlag auf. Der Gummianschlag dient zur Dämpfung der radialen Bewegung der beiden Befestigungsschenkel. Vorteilhaft ragt der wenigstens eine Gummianschlag in einem Winkel von einem der Befestigungsschenkel ab. Je nach Wahl des Winkels lassen sich so unterschiedliche Vorspannungen des Gummianschlags und somit unterschiedliche Dämpfungscharakteristiken einstellen. Vorteilhaft ragt der wenigstens eine Gummianschlag von dem radial außenliegenden Befestigungsschenkel radial einwärts ab.

Gemäß einem weiteren Aspekt wird ein Wellenlager für eine Welle, insbesondere einer Kardanwelle, eines Kraftfahrzeugs vorgeschlagen, aufweisend einen Innenkörper, einen den Innenkörper unter Ausbildung eines Spalts umgebenden Lagerträger, der an einem Kraftfahrzeugteil befestigbar ist, und einen Elastomerkörper. Der Elastomerkörper ist form- und oder kraftschlüssig innerhalb des Spalts gehalten, indem der Elastomerkörper mittels seiner wenigstens einen Aufstecknut formschlüssig und/oder kraftschlüssig derart auf den Lagerträger und/oder den Innenkörper (nicht beansprucht) aufgesteckt ist, dass die Aufstecknut den Lagerträger oder den Innenkörper (nicht beansprucht) umgreift.

In einer vorteilhaften Ausgestaltung ist der Lagerträger oder der Innenkörper aus einem Strangpressprofil oder Kunststoff hergestellt. Ein als Strangpressprofil ausgebildeter Lagerträger oder Innenkörper ist kostengünstig in der Herstellung. Hierzu wird der Lagerträger oder der Innenkörper extrudiert und auf Länge gesägt.

Vorteilhaft ist der Lagerträger oder der Innenkörper aus einem Aluminium-Strangpressprofil hergestellt.

Nachfolgend werden der Elastomerkörper und das Wellenlager sowie weitere Merkmale und Vorteile anhand von Ausführungsbeispielen näher erläutert, die in den Figuren schematisch dargestellt sind. Hierbei zeigen:
- Fig. 1: ein Wellenlager im Teilschnitt mit einem Elastomerkörper gemäß einer ersten Ausführungsform;
- Fig. 2: den Elastomerkörper gemäß der ersten Ausführungsform im Teilschnitt;
- Fig. 3: ein Wellenlager im Teilschnitt mit einem Elastomerkörper gemäß einer zweiten Ausführungsform; und
- Fig. 4: den Elastomerkörper gemäß der zweiten Ausführungsform im Teilschnitt.

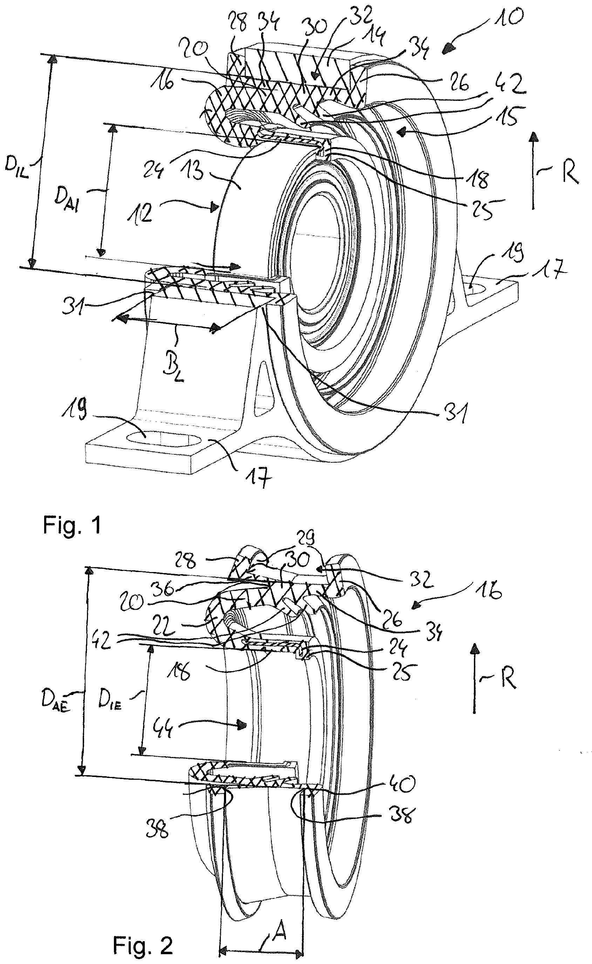

In Fig. 1 ist ein Wellenlager 10 gezeigt, das zur Lagerung einer nicht dargestellten Welle, insbesondere einer Kardanwelle, eines Kraftfahrzeugs dient.

Das Wellenlager weist einen Innenkörper 12, der vorliegend als ein Wälzlager 13 ausgebildet ist, und einen Lagerträger 14 auf, der den Innenkörper 12 unter Ausbildung eines Spalts 15 umgibt. Innerhalb des Spalts 15 ist ein Elastomerkörper 16 angeordnet, der den Innenkörper 12 elastisch mit dem Lagerträger 14 verbindet.

Der Lagerträger 14 ist aus einem Strangpressprofil, insbesondere einem Aluminiumstrangpressprofil, und dient zur Befestigung des Wellenlagers 10 an einem nicht dargestellten Kraftfahrzeugteil. Hierzu weist der Lagerträger 14 abragende Befestigungsflansche 17 mit darin eingebrachten Öffnungen 19 zum Anschrauben an einem nicht dargestellten Kraftfahrzeugteil auf. Darüber hinaus kann der Lagerträger auch aus einem Kunststoff hergestellt sein.

Wie in Fig. 2 ersichtlich ist, ist der Elastomerkörper 16 im Querschnitt näherungsweise U-förmig ausgebildet und weist einen ersten Befestigungsschenkel 18, einen zweiten Befestigungsschenkel 20 und einen die beiden Befestigungsschenkel 18, 20 miteinander verbindenden Verbindungsabschnitt 22 auf.

Gemäß Fig. 1 liegt der zweite Befestigungsschenkel 20 an dem Wälzlager 13 an, wobei zur Erhöhung der Flächenpressung in den zweiten Befestigungsschenkel 20 eine Buchse 24 eingebracht ist. Die Buchse 24 kann formschlüssig und/oder unter Verwendung eines Bindemittels mit dem Elastomerkörper 16 verbunden sein. Zur Erzielung eines Formschlusses kann die Innenbuchse 24 mit Öffnungen versehen sein, durch welche das Elastomer des Elastomerkörpers 16 hindurchtreten kann. An seinem freien Ende weist der zweite Befestigungsschenkel 20 einen Absatz 25 auf, an dem das Wälzlager 13 anliegt und zu dessen axialer Arretierung dient.

Der Verbindungsabschnitt 22 ist U-förmig und bildet eine Falte, insbesondere eine Rollfalte aus, wobei der Verbindungsabschnitt 22 die beiden Befestigungsschenkel 18, 20 elastisch und federnd miteinander verbindet.

Wie in Fig. 2 ersichtlich ist, weist der erste Befestigungsschenkel 18 eine Aufstecknut 32 zum formschlüssigen und/oder kraftschlüssigen Aufstecken auf den Lagerträger 14 auf. Die Aufstecknut 32 weist einen ersten Schenkel 26, einen zweiten Schenkel 28 und eine die beiden Schenkel 26, 28 miteinander verbindende Basis 30 auf. Im aufgesteckten Zustand liegen die Innenseiten 29 der Schenkel 26, 28 an den Stirnseiten 31 des Lagerträgers 14 an. Da ein Abstand A zwischen den Innenseiten 29 der Schenkel 26, 28 kleiner ist als eine Breite B_{L} des Lagerträgers 14 wird die Aufstecknut 32 mit einer axialen Vorspannung auf dem Lagerträger 14 gehalten.

Wie ferner in Fig. 2 ersichtlich ist, weist die Basis 30 einen ersten Basisabschnitt 34 und einen zweiten Basisabschnitt 36 auf. Der erste Basisabschnitt 34 ist dabei ein Fortsatz des ersten Befestigungsschenkels 18. Der zweite Basisabschnitt 36 ragt in einem Winkel von dem ersten Befestigungsschenkel 18 ab und ist verschwenkbar bezüglich dem ersten Befestigungsschenkel 18 beziehungsweise dem ersten Basisabschnitt 34. Dadurch ist die Aufstecknut 32, insbesondere ein Teilbereich der Aufstecknut 32, von dem Elastomerkörper 16, insbesondere von dem eine Falte bildenden Verbindungsabschnitt 22, abgekoppelt ist, so dass die Bewegungsfreiheit des Elastomerkörpers 16 erhalten bleibt.

Wie ferner in Fig. 2 ersichtlich ist, ist in die Ecken 38 der Aufnahmenut 32 jeweils eine Aussparung 40 eingebracht, die ein Einschneiden scharfer Kanten des Lagerträgers 14 in den Elastomerkörper 16 verhindern.

Der erste Befestigungsschenkel 18 weist zudem zwei radial einwärts abragende Gummianschläge 42 auf. Die Gummianschläge 42 dienen zur Dämpfung der Bewegung des zweiten Befestigungsschenkels 20 in Radialrichtung R. Hierzu ragen die beiden Gummianschläge 42 in einem Winkel von dem ersten Befestigungsschenkel 18 ab. Je nach Wahl des Winkels kann die Vorspannung der Gummianschläge 42 und damit die Dämpfungscharakteristik eingestellt werden.

Der Elastomerkörper 16 weist einen Außendurchmesser D_{AE} auf, der größer ist als ein Innendurchmesser D_{IL} des Lagerträgers 14. Ferner weist der Elastomerkörper 16 einen Innendurchmesser D_{IE} auf, der kleiner ist als ein Außendurchmesser D_{AI} des Innenkörpers 12. Dadurch wird eine massive Erhöhung der radialen Überdeckung des Elastomerkörpers 16 von Innendurchmesser D_{IL} des Lagerträgers 14 und Außendurchmesser D_{AI} des Innenkörpers 12 geschaffen. Durch diese massive Erhöhung der radialen Überdeckung ist der Elastomerkörper 16 mit einer radialen Vorspannung zwischen dem Lagerträger 14 und dem Innenkörper 12 gehalten.

Im Folgenden wird ein Verfahren zur Montage des Wellenlagers 10 beschrieben. Hierzu wird zunächst das Wälzlager 13 derart in die durch den zweiten Befestigungsschenkel 20 gebildete Aufnahmeöffnung 44 eingesetzt, dass das Wälzlager 13 an dem Absatz 25 anliegt. Da der Elastomerkörper 16 in Radialrichtung R eine Ausdehnung aufweist, die größer ist als der Spalt 15, ist es zum Einsetzen des Elastomerkörpers 16 in den Lagerträger 14 erforderlich, den Elastomerkörper 16 zusammenzudrücken. Im zusammengedrückten Zustand wird dann die Aufstecknut 32 auf den Lagerträger 14 aufgesteckt.

Nachfolgend wird eine weitere Ausführungsform des Elastomerkörpers beschrieben, wobei für deren Beschreibung die bereits zuvor verwendeten Bezugszeichen für gleiche oder funktionsgleiche Teile verwendet werden.

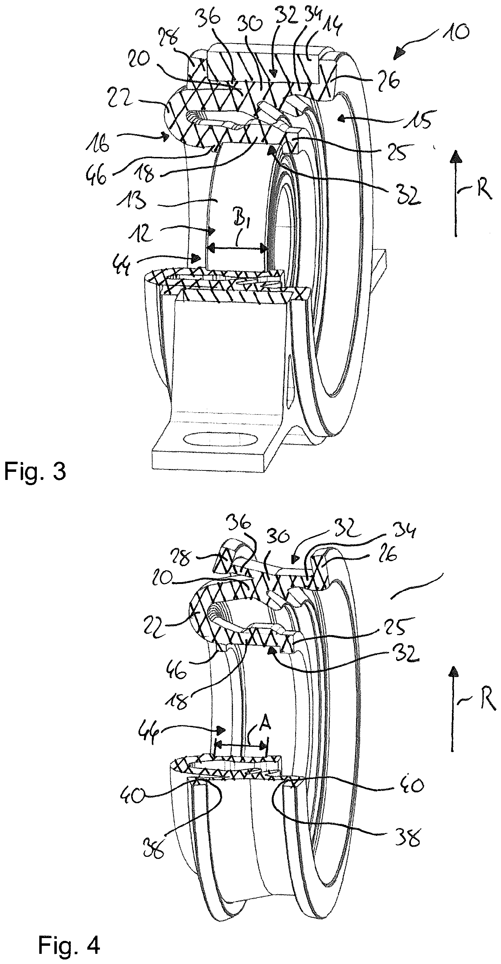

In den Figuren 3 und 4 ist eine zweite Ausführungsform des Elastomerkörpers 16 gezeigt, der sich von der ersten Ausführungsform dadurch unterscheidet, dass der zweite Befestigungsschenkel 20 anstelle einer Buchse zum Festlegen an dem Wälzlager 13 eine weitere Aufstecknut 32 aufweist. Die Aufstecknut 32 ist gemäß Fig. 3 aus dem zweiten Befestigungsschenkel 20, der die Basis 30 bildet, dem Absatz 25, der den ersten Schenkel 26 bildet, und einem dem Absatz 25 gegenüberliegenden Vorsprung 46, der den zweiten Schenkel 28 bildet, gebildet.

Da ein Abstand A zwischen den Innenseiten 29 von Absatz 25 und Vorsprung 46 kleiner ist als eine Breite Bi des Innenkörpers 12, hier des Wälzlagers 13, wird eine Vorspannung in axialer Richtung erzeugt, so dass die Aufnahmenut 32 formschlüssig und/oder kraftschlüssig auf das Wälzlager 13, insbesondere dessen Außenhülse, aufgesteckt werden kann. Die Montage des Wellenlagers 10 mit dem Elastomerkörper 16 gemäß der zweiten Ausführungsform erfolgt ansonsten analog, wie zu vor beschrieben.

### Bugszeichenliste

- 10: Wellenlager
- 12: Innenkörper
- 13: Wälzlager
- 14: Lagerträger
- 15: Spalt
- 16: Elastomerkörper
- 17: Befestigungsflansch
- 18: erster Befestigungsschenkel
- 19: Öffnung
- 20: zweiter Befestigungsschenkel
- 22: Verbindungsabschnitt
- 24: Buchse
- 25: Absatz
- 26: erster Schenkel
- 28: zweiter Schenkel
- 29: Innenseite
- 30: Basis
- 31: Stirnseite
- 32: Aufstecknut
- 34: erster Basisabschnitt
- 36: zweiter Basisabschnitt
- 38: Ecke
- 40: Aussparung
- 42: Gummianschlag
- 44: Aufnahmeöffnung
- 46: Vorsprung

- R: Radialrichtung
- A: Abstand
- B_{L}: Breite des Lagerträgers
- B_{I}: Breite des Innenkörpers
- D_{AE}: Außendurchmesser Elastomerkörper
- D_{IE}: Innendurchmesser Elastomerkörper
- D_{IL}: Innendurchmesser Lagerträger
- D_{AI}: Außendurchmesser Innenkörper

## Patentansprüche

1. Elastomerkörper (16) für ein Wellenlager (10) eines Kraftfahrzeugs, der in einem Spalt (15) zwischen einem Lagerträger (14) und einem Innenkörper (12) anordenbar ist, aufweisend einen ersten Befestigungsschenkel (18), einen zweiten Befestigungsschenkel (20) und einen die beiden Befestigungsschenkel (18, 20) miteinander verbindenden Verbindungsabschnitt (22), wobei wenigstens einer der Befestigungsschenkel (20) eine Aufstecknut (32) aufweist, die derart auf den Lagerträger (14) aufsteckbar ist, dass die Aufstecknut (32) den Lagerträger (14) umgreift, wobei die Aufstecknut (32) einen ersten Schenkel (26), einen zweiten Schenkel (28) und eine die beiden Schenkel (26, 28) miteinander verbindende Basis (30) aufweist, wobei die Basis (30) einen ersten Basisabschnitt (34) und einen zweiten Basisabschnitt (36) aufweist, und wobei der zweite Basisabschnitt (36) bezüglich dem Befestigungsschenkel (20) verschwenkbar ist, um die Aufstecknut (32) über die Gesamtlänge des Lagerträgers (14) aufzuweiten und die Aufstecknut (32) zum kraftschlüssigen Verbinden auf den Lagerträger (14) aufzustecken.

2. Elastomerkörper nach Anspruch 1, **dadurch gekennzeichnet, dass** ein Abstand A zwischen den Innenseiten der Schenkel (26, 28) kleiner ist als eine Breite B_{L} des Lagerträgers (14) und/oder eine Breite B_{I} des Innenkörpers (12).

3. Elastomerkörper nach Anspruch 1 oder 2, **dadurch gekennzeichnet, dass** der zweite Basisabschnitt (36) in einem Winkel von dem Befestigungsschenkel (18, 20) abragt.

4. Elastomerkörper nach einem der vorhergehenden Ansprüche, **dadurch gekennzeichnet, dass** in Ecken (38) der Aufstecknut (32) wenigstens eine Aussparung (40) eingebracht ist.

5. Elastomerkörper nach einem der vorhergehenden Ansprüche, **dadurch gekennzeichnet, dass** der Elastomerkörper (16) einen Außendurchmesser D_{AE} aufweist und der Lagerträger (14) einen Innendurchmesser D_{IL} aufweist, wobei der Außendurchmesser D_{AE} des Elastomerkörpers (16) größer ist als der Innendurchmesser D_{IL} des Lagerträgers (14) und dass der Elastomerkörper (16) einen Innendurchmesser D_{IE} aufweist und der Innenkörper (12) einen Außendurchmesser D_{AI} aufweist, wobei der Innendurchmesser D_{IE} kleiner ist als der Außendurchmesser D_{AI} des Innenkörpers (12).

6. Elastomerkörper nach einem der vorhergehenden Ansprüche, **dadurch gekennzeichnet, dass** wenigstens einer der Befestigungsschenkel (18, 20) eine Buchse (24) aufweist.

7. Elastomerkörper nach einem der vorhergehenden Ansprüche, **dadurch gekennzeichnet, dass** einer der Befestigungsschenkel (18, 20) wenigstens eine abragenden Gummianschlag (42) aufweist.

8. Wellenlager (10) für eine Welle eines Kraftfahrzeugs aufweisend einen Innenkörper (12), einen den Innenkörper (12) unter Ausbildung eines Spalts (15) umgebenden Lagerträger (14), der an einem Kraftfahrzeugteil befestigbar ist, und einen Elastomerkörper (16) nach einem der Ansprüche 1 bis 7.

9. Wellenlager nach Anspruch 8, **dadurch gekennzeichnet, dass** der Lagerträger (14) oder der Innenkörper (12) aus einem Strangpressprofil oder Kunststoff hergestellt ist.

## Claims

1. Elastomer body (16) for a shaft bearing (10) of a motor vehicle, which can be arranged in a gap (15) between a bearing support (14) and an inner body (12), comprising a first fastening leg (18), a second fastening leg (20) and a connecting portion (22) which interconnects the two fastening legs (18, 20), wherein at least one of the fastening legs (20) has a plug-on groove (32) which can be plugged onto the bearing support (14) in such a way that the plug-on groove (32) engages around the bearing support (14), wherein the plug-on groove (32) has a first leg (26), a second leg (28) and a base (30) which interconnects the two legs (26, 28), wherein the base (30) has a first base portion (34) and a second base portion (36), and wherein the second base portion (36) is pivotable with respect to the fastening leg (20) in order to widen the plug-on groove (32) over the entire length of the bearing support (14) and to plug the plug-on groove (32) onto the bearing support (14) for force-fitting connection.

2. Elastomer body according to Claim 1, **characterized in that** a distance A between the inner sides of the legs (26, 28) is less than a width B_{L} of the bearing support (14) and/or a width B_{I} of the inner body (12) .

3. Elastomer body according to Claim 1 or 2, **characterized in that** the second base portion (36) projects from the fastening leg (18, 20) at an angle.

4. Elastomer body according to one of the preceding claims, **characterized in that** at least one cutout (40) is incorporated in corners (38) of the plug-on groove (32).

5. Elastomer body according to one of the preceding claims, **characterized in that** the elastomer body (16) has an outside diameter D_{AE} and the bearing support (14) has an inside diameter D_{IL}, wherein the outside diameter D_{AE} of the elastomer body (16) is greater than the inside diameter D_{IL} of the bearing support (14), and **in that** the elastomer body (16) has an inside diameter D_{IE} and the inner body (12) has an outside diameter D_{AI}, wherein the inside diameter D_{IE} is less than the outside diameter D_{AI} of the inner body (12).

6. Elastomer body according to one of the preceding claims, **characterized in that** at least one of the fastening legs (18, 20) has a bushing (24).

7. Elastomer body according to one of the preceding claims, **characterized in that** one of the fastening legs (18, 20) has at least one projecting rubber stop (42).

8. Shaft bearing (10) for a shaft of a motor vehicle, comprising an inner body (12), a bearing support (14) which surrounds the inner body (12) with the formation of a gap (15) and which can be fastened to a motor vehicle part, and an elastomer body (16) according to one of Claims 1 to 7.

9. Shaft bearing according to Claim 8, **characterized in that** the bearing support (14) or the inner body (12) is produced from an extruded profile or plastic.

## Revendications

1. Corps en élastomère (16) pour un palier d'arbre (10) d'un véhicule automobile, qui peut être disposé dans une fente (15) entre un support de palier (14) et un corps intérieur (12), présentant une première branche de fixation (18), une deuxième branche de fixation (20) et une portion de liaison (22) reliant l'une à l'autre les deux branches de fixation (18, 20), au moins l'une des branches de fixation (20) présentant une rainure d'enfichage (32) qui peut être enfichée sur le support de palier (14) de telle sorte que la rainure d'enfichage (32) vienne en prise autour du support de palier (14), la rainure d'enfichage (32) présentant une première branche (26), une deuxième branche (28) et une base (30) reliant l'une à l'autre les deux branches (26, 28), la base (30) présentant une première portion de base (34) et une deuxième portion de base (36), et la deuxième portion de base (36) pouvant pivoter par rapport à la branche de fixation (20) afin d'élargir la rainure d'enfichage (32) sur la longueur totale du support de palier (14) et d'enficher la rainure d'enfichage (32) pour sa liaison par engagement par force sur le support de palier (14).

2. Corps en élastomère selon la revendication 1, **caractérisé en ce qu'**une distance A entre les côtés intérieurs des branches (26, 28) est inférieure à une largeur B_{L} du support de palier (14) et/ou une largeur B_{I} du corps intérieur (12).

3. Corps en élastomère selon la revendication 1 ou 2, **caractérisé en ce que** la deuxième portion de base (36) fait saillie suivant un certain angle par rapport à la branche de fixation (18, 20).

4. Corps en élastomère selon l'une quelconque des revendications précédentes, **caractérisé en ce que** dans les coins (38) de la rainure d'enfichage (32) est réalisé au moins un évidement (40).

5. Corps en élastomère selon l'une quelconque des revendications précédentes, **caractérisé en ce que** le corps en élastomère (16) présente un diamètre extérieur D_{AE} et le support de palier (14) présente un diamètre intérieur D_{IL}, le diamètre extérieur D_{AE} du corps en élastomère (16) étant supérieur au diamètre intérieur D_{IL} du support de palier (14) et **en ce que** le corps en élastomère (16) présente un diamètre intérieur D_{IE} et le corps intérieur (12) présente un diamètre extérieur D_{AI}, le diamètre intérieur D_{IE} étant inférieur au diamètre extérieur D_{AI} du corps intérieur (12) .

6. Corps en élastomère selon l'une quelconque des revendications précédentes, **caractérisé en ce qu'**au moins l'une des branches de fixation (18, 20) présente une douille (24).

7. Corps en élastomère selon l'une quelconque des revendications précédentes, **caractérisé en ce que** l'une des branches de fixation (18, 20) présente au moins une butée en caoutchouc saillante (42).

8. Palier d'arbre (10) pour un arbre d'un véhicule automobile, présentant un corps intérieur (12), un support de palier (14) entourant le corps intérieur (12) en formant une fente (15), qui peut être fixé à une partie du véhicule automobile, et un corps en élastomère (16) selon l'une quelconque des revendications 1 à 7.

9. Palier d'arbre selon la revendication 8, **caractérisé en ce que** le support de palier (14) ou le corps intérieur (12) est fabriqué à partir d'un profilé extrudé ou de plastique.
